# EUROPÄISCHE PATENTANMELDUNG

(11) **EP 2 343 231 A1**
(43) Veröffentlichungstag der Anmeldung: **13.07.2011**
(21) Anmeldenummer: 11150358.7
(22) Anmeldetag: 07.01.2011
(51) Int. Cl.: B62D 65/02, B62D 65/04

(54) **Verfahren zur Montage eines Karosseriebauteils an eine Rohkarosserie und Halter**

(30) Priorität: 11.01.2010 DE 102010000777
(71) Anmelder: Ford Global Technologies, LLC, Dearborn, MI 48126 (US)
(72) Erfinder: Maier, Rüdiger, 57150, Creutzwald (FR); Niessen, Bert, 52396, Heimbach (DE)
(74) Vertreter: Dörfler, Thomas

(57) **Zusammenfassung**

Die Erfindung betrifft ein Verfahren zur Montage eines Karosseriebauteils an eine Rohkarosserie (1) eines Fahrzeuges (2) sowie einen Halter (13) insbesondere zur Verwendung in diesem Verfahren.
Zur leichteren und passgenaueren Montage des Karosseriebauteiles bezüglich benachbarter Karosseriebauteile ist erfindungsgemäß vorgesehen, dass ein Vermessen der tatsächlichen Lage zumindest eines Teilbereiches zumindest einer der Seitenwände in der Rohkarosserie (1) bezüglich zumindest einer ersten Koordinate des Fahrzeugs (2) erfolgt. Dann wird auf der Grundlage der Vermessung mindestens ein Referenzpunkt (R₁) bezüglich zumindest der ersten Koordinate des Fahrzeugs (2) für das zu montierende Karosseriebauteil erstellt. Anschließend das zu montierenden Karosseriebauteils relativ zu diesem zumindest einem Referenzpunkt (R₁) angebracht. Das Verfahren ist insbesondere für die Montage des Vorderwagens (7) in die Rohkarosserie (1) geeignet.

## Beschreibung

Die Erfindung betrifft ein Verfahren zur Montage eines Karosseriebauteils an eine Rohkarosserie eines Fahrzeugs mit Seitenwänden. Die Erfindung betrifft ferner einen Halter insbesondere zur Verwendung in diesem Verfahren.

Bei heutigen Fahrzeugen werden hohe Anforderungen an eine exakte Positionierung der Karosseriebauteile in der Karosserie gestellt, da hierüber ein Spalt- und Passungsbild, das die Spaltbeabstandung von Karosserieteilen beschreibt, bestimmt wird. Lampen, Kotflügel, Kühlergrill, Kofferraumabdeckung und Motorhaube sollen in Montagelage möglichst kleine, vorzugsweise parallele Spalte mit möglichst geringen Variationen bilden. Desgleichen sind Passungsstufen ähnlichen Anforderungen unterworfen. Daher muss das Karosserieteil bei der Montage sehr exakt in die Rohkarosserie eingebaut werden. Spätere Korrekturen können nur sehr kostenaufwendig durchgeführt werden.

Gleichzeitig führt eine stärkere Modularisierung im Automobilbau dazu, dass vormontierte Einheiten verwendet werden, in denen bereits infolge der zur Einheit vormontierten Karosserieteilen Formabweichungen aufsummiert sein können, welches die Montage dieser Einheiten unter Einhaltung des geforderten Spalt- und Passungsbildes wesentlich erschwert. Eine derartige Einheit ist beispielsweise der Vorderwagen des Fahrzeuges, der aus Kühlerrahmen, Kühlpaket, Motorhaubenschloss und Scheinwerfern bis hin zu den Stoßfängern bestehen kann.

In der DE 42 16 606 A1 werden antastbare Referenzpunkte für die Karosserieteile beschrieben, die ein einheitliches maßliches Bezugssystem aufbauen und als neutrale Ausgangspositionen genutzt werden. Schablonen oder Lehren sollen unter Nutzung dieser Referenzpunkte weitere Anbauhilfe für Anbauteile geben. Somit ist ein vergleichsweise hoher apparativer Aufwand notwendig.

In der US 7 143 494 B2 wird vorgeschlagen, in einem aufwendigen Verfahren Referenzpunkte für die Karosseriebauteile auf die zuvor erstellte Rohkarosse zu setzen, die Maßabweichungen bei der Herstellung und Verschweißung der Rohkarosse berücksichtigen und die zur Montage der Karosserieteile mit Sensoren ertastet werden.

Der Erfindung liegt die Aufgabe zugrunde, das eingangs genannte Verfahren zur Montage eines Karosseriebauteils an eine Karosserie eines Fahrzeugs so weiterzubilden, das eine unaufwendigere und Kosten günstigere Montage der Karosseriebauteile ermöglicht wird. Zudem soll das Verfahren auch in weniger technisierten Produktionsstätten durchführbar sein.

Die gestellte Aufgabe wird erfindungsgemäß durch die Merkmale des Anspruches 1 gelöst. Vorteilhafte Weiterbildungen werden in den anhängenden Unteransprüchen beschrieben. Die gestellte Aufgabe wird insbesondere auf der Grundlage der folgenden Verfahrensschritte gelöst:
- Vermessen der tatsächlichen Lage zumindest eines Teilbereiches zumindest einer der Seitenwände in der Rohkarosserie bezüglich zumindest einer ersten Koordinate des Fahrzeugs,
- Erstellen mindestens eines Referenzpunktes bezüglich zumindest der ersten Koordinate des Fahrzeugs für das zu montierende Karosseriebauteil auf der Grundlage der Vermessung und
- Anbringen des zu montierenden Karosseriebauteils relativ zu diesem zumindest einem Referenzpunkt.

Mit dem Vermessen der tatsächlichen Lage zumindest eines Teilbereiches zumindest einer der Seitenwände in der Rohkarosserie bezüglich zumindest einer ersten Koordinate des Fahrzeugs können Formabweichungen und Lageabweichung der Seitenwand zur Unterbodengruppe erfasst und über die Positionierung des mindestens einen Referenzpunktes auf einfache Weise optimal ausgeglichen werden. Damit wird eine Referenz geschaffen, die ohne Zuhilfenahme von komplizierten, optischen Systemen mittels einer einfachen und leichten Vorrichtung sicher ermittelbar ist. Somit ist das erfindungsgemäße Verfahren auch in technisch einfacher ausgestatteten Autoproduktionsstätten sicher einsetzbar. Ferner kann mittels des Verfahrens die Lagebestimmung der Seitenwand bzw. der Seitenwände individuell für jedes Fahrzeug erfolgen, so dass stets die tatsächliche Lage der Seitenwand des jeweiligen individuellen Fahrzeuges berücksichtigt und damit ein optimales Spalt- und Passungsbild erzielt werden kann.

Das Vermessen der tatsächlichen Lage zumindest eines Teilbereiches zumindest einer der Seitenwände in der Rohkarosserie bezüglich zumindest einer ersten Koordinate des Fahrzeugs kann berührungsfrei durchgeführt werden. Vorzugsweise erfolgt das Vermessen der tatsächlichen Lage mittels einer mit Lasermessung arbeitenden Messvorrichtung.

Vorzugsweise wird die tatsächliche Lage zumindest eines Teilbereiches der beiden Seitenwände, wie deren A-, B- und/oder C-Säulen, in der Rohkarosserie bezüglich zumindest einer ersten Koordinate des Fahrzeugs erfasst. Hieraus kann beispielsweise bezüglich der ersten Koordinate ein tatsächlicher Nullpunkt als Fahrzeugmitte ermittelt werden. Der Referenzpunkt kann dann mittels einer einfachen Zentriereinrichtung so gesetzt und anschließend festgelegt werden, dass er sich auf die tatsächliche Fahrzeugmitte bezüglich der ersten Koordinate bezieht.

Die Nullpunktermittlung kann ferner als Basis zur Ermittlung und Positionierung weitere Referenzpunkte bezüglich der jeweiligen Koordinate dienen, auf die sich der Nullpunkt bezieht. Dies kann insbesondere vorteilhaft bei spiegelsymmetrisch anzuordnenden Karosseriebauteilen und/oder bei Karosseriebauteilen sein, die zwischen zwei spiegelsymmetrisch anzuordnenden Karosseriebauteilen angeordnet werden. Das erfindungsgemäße Verfahren ist in gleicher Weise zur Ermittlung von zumindest einem Referenzpunkt bezüglich zumindest einer beliebigen Koordinate des Fahrzeuges geeignet. Der Referenzpunkt für das zu montierende Karosseriebauteiles kann bezüglich einer zweiten und/oder einer dritten Koordinate des Fahrzeuges ermittelt werden, wobei die erste, zweite und dritte Koordinate vorzugsweise senkrecht zueinander stehen.

Es kann zur Festlegung des mindestens einen Referenzpunktes bezüglich zumindest einer weiteren Koordinaten vorgesehen sein, dass ein weiterer, bereits erstellter Referenzpunkt bezüglich der weiteren Koordinate für ein anderes zu montierendes Karosseriebauteil vor dessen Festlegung an der Rohkarosserie genutzt wird. Hierzu sind wegen ihrer relativ geringen Distanz zum zu erstellenden Referenzpunkt Referenzpunkte benachbarter Karosseriebauteile besonders geeignet.

Die Aufgabe vollständig lösend, kann vorgesehen sein, dass die Vermessung der tatsächlichen Lage eines vormontierten Karosserieteiles bezüglich zumindest der ersten Koordinate des Fahrzeugs und dass der mindestens eine Referenzpunkt bezüglich zumindest der ersten Koordinate des Fahrzeugs für das zu montierende Karosseriebauteil auf der Grundlage der Vermessung erfolgt. Desgleichen kann die tatsächliche Lage zweier vormontierter Karosseriebauteile bezüglich zumindest der ersten Koordinate erfasst werden und hieraus ein bestimmter Bezugspunkt, wie der Nullpunkt, ermittelt werden, relativ zu dem der Referenzpunkt für das zu montierende Karosseriebauteil angeordnet werden kann. In beiden Fällen können zusätzlich mögliche Montageabweichungen des zuvor montierten Karosseriebauteiles bzw. der zuvor montierten Karosseriebauteile kompensiert werden. In beiden Fällen können als weitere Verfahrensschritte wie zuvor das Erstellen mindestens eines Referenzpunktes bezüglich zumindest der ersten Koordinate des Fahrzeugs für das zu montierende Karosseriebauteil auf der Grundlage der Vermessung und Anbringen des zu montierenden Karosseriebauteils relativ zu diesem zumindest einem Referenzpunkt erfolgen.

In einer Weiterbildung des Verfahrens kann der mindestens eine Referenzpunkt bezüglich der ersten Koordinate mittels eines Einsatzbauteils gebildet werden, das auf der Grundlage der Vermessung an der Rohkarosserie positioniert wird. Vorzugsweise wird das Einsatzbauteil auf einem tragenden Teil der Rohkarosserie, wie Längsträger und Querträger, positioniert. Das Einsatzbauteil kann kurzzeitig, beispielsweise für die Montagedauer des Karosserieteiles, oder dauerhaft an der Karosserie festgelegt werden.

Das Einsatzbauteil kann als Halter ausgebildet sein. Der Halter kann eine Aufnahme und/oder einen Anschlag mit dem Referenzpunkt für ein Positionierelement oder einen Positionierabschnitt des zu montierende Karosseriebauteils aufweisen. Zum Anbringen des zu montierenden Karosseriebauteils relativ zu dem zumindest einem Referenzpunkt kann das Positionierelement oder der Positionierabschnitt des zu montierende Karosseriebauteils in die Aufnahme aufgenommen bzw. gegen den Anschlag geführt werden. vorzugsweise weist das Positionierelement zumindest einen stiftartigen Abschnitt zum Eingriff in die Aufnahme auf. Hierdurch wird eine besonders exakte Positionierung des montierenden Karosseriebauteiles ermöglicht.

Zur leichteren Aufnahme des Positionierelementes oder des Positionierabschnittes des zu montierende Karosseriebauteils kann die Aufnahme eine Vertiefung oder Ausnehmung mit einer Tiefendimension aufweisen. Der Halter kann so an der Karosserie festgelegt werden, dass die Tiefendimension zumindest in etwa senkrecht zur ersten Koordinate in Richtung einer zweiten Koordinate des Fahrzeugs verläuft. Die zweite Koordinate des Fahrzeuges verläuft vorzugsweise senkrecht zu der ersten Koordinate und einer dritten Koordinate des Fahrzeugs. Somit kann der Referenzpunkt bezüglich der zweiten Koordinate über die Größe der Tiefendimension eingestellt werden. Die Aufnahme kann mit einer einstellbaren Tiefendimension ausgebildet sein. Alternativ kann der Halter mehrere, bezüglich der Tiefendimension unterschiedliche Aufnahmen aufweisen, wobei eine Aufnahme auf der Grundlage der Vermessung bezüglich der zweiten Koordinate ausgewählt wird. Es können auch unterschiedliche Halter im Produktionsverlauf bereitgestellt werden, die jeweils eine andere Tiefendimension aufweisen. Die Bereitstellung, Positionierung und/oder Festlegung des geeigneten Halters kann automatisch auf der Grundlage der Vermessung erfolgen.

Die Aufnahme kann einen Aufnahmegrund aufweisen. Der Aufnahmequerschnitt der Aufnahme kann sich in Richtung der Tiefendimension bzw. zum Aufnahmegrund hin verjüngen. Hierdurch kann eine trichter- oder keilartige Führung zum leichteren Einführen des Positionierelementes oder Positionierabschnitts bereitgestellt werden. Vorzugsweise ist der Halter als Blechstreifen ausgebildet. Er weist vorzugsweise eine endstirnseitige Aufnahme auf. Die Aufnahme kann einen Aufnahmeschlitz umfassen, der seitlich und vorzugsweise senkrecht in die größeren Seitenflächen des Blechstreifens einmündet. Zur exakteren Positionierung des zu montierenden Karosseriebauteiles kann der Halter so auf der Karosserie positioniert werden, dass sich Aufnahmeschlitz seitlich in Richtung der dritten Koordinate erstreckt.

Vorzugsweise ist das Positionierelement oder der Positionierabschnitt des zu montierenden Karosseriebauteiles in der Montageposition desselben zumindest bezüglich der Koordinate bzw. der Koordinaten form- und/oder kraftschlüssig in der Aufnahme angeordnet. Hierzu kann beispielsweise eine Steck- und/oder Schnappverbindung vorgesehen sein.

Vorzugsweise ist das das Positionierelement oder der Positionierabschnitt formschlüssig in dem Aufnahmeschlitz angeordnet. Bei einer Verjüngung des Aufnahmequerschnitt in Richtung der Tiefendimension zum Aufnahmegrund hin kann der Aufnahmequerschnitt im Bereich des Aufnahmegrundes so ausgebildet sein, dass das zugeordnete Positionierelement oder der zugeordnete Positionierabschnitt des zu montierenden Karosseriebauteils seitlich formschlüssig an den Seitenwänden der Aufnahme anliegt und/oder an dem Aufnahmegrund aufliegt. Hierdurch kann ein bezüglich der ersten Koordinate fester Sitz des Positionierelements bzw. des Positionierabschnitts in der Aufnahme erzielt werden. Der Aufnahmeboden kann als Referenzpunkt dienen.

Das Einsatzbauteil bzw. der Halter kann mittels eines üblichen Fügeverfahrens, wie Schweißen, Kleben oder Löten, an der Rohkarosserie festgelegt werden. Vorzugsweise wird das Einsatzbauteil bzw. der Halter mittels Laserschweißen oder Lichtbogenschweißen, beispielsweise nach dem Weldfast-Verfahren, auf der Karosserie festgelegt. Der streifenartige Halter kann einen abgewinkelten Fuß zur Abstützung und Festlegung an der Rohkarosserie aufweisen. Vorzugsweise ist der streifenartige Halter als Lachse mit gestrecktem Fuß ausgebildet, der mittels des Weldfast-Verfahrens ohne Schweißzusatzwerkstoff unmittelbar mit der Rohkarosserie stoffschlüssig verbunden werden kann.

Gemäß einer üblichen Zuordnung beim Automobilbau können die drei Koordinaten der X-Koordinate, d.h. der Fahrzeuglänge, der Y-Koordinate, d.h. der Fahrzeugbreite und der Z-Koordinate, d.h. der Fahrzeughöhe, zugeordnet werden. Welche dieser Koordinaten als erste Koordinate, zweite Koordinate oder dritte Koordinate angesehen wird, hängt letztlich von der Lage des zu montierenden Karosseriebauteiles und damit von der zu bestimmenden Koordinate ab. Es liegt auf der Hand, dass auch die relative Lage der Seitenwände bezügl ich zweier oder aller drei Koordinaten vermessen werden kann, um hierüber eine Bestimmung der tatsächlichen Fahrzeugmitte in Hinsicht auf die Seitenwände bezüglich der beiden bzw. aller drei Koordinaten vorzunehmen und relativ hierzu die erforderlichen Referenzpunkte für das zu montierende Karosserie oder die zu montierenden Karosserieteile an der Rohkarosserie anzubringen.

Das Karosseriebauteil kann ein einzelnes Bauteil sein oder aus zwei oder mehr vorgefertigten Bauteilen aufgebaut sein. Das Karosseriebauteil kann ein vorgefertigtes Modul sein. Besonders geeignet ist das erfindungsgemäße Verfahren zur Montage eines Karosseriebauteiles, das an der Unterbodengruppe und an zumindest einer Seitenwand festgelegt wird, da hier die eingangs betrachteten Abweichungen besonders zum Tragen kommen. Das einzubauende Karosseriebauteil kann der Vorderwagen des Fahrzeugs sein, wobei dieser als Modul mit zumindest einem Teil der eingangs beschriebenen Komponenten ausgebildet sein kann. Hierbei kann die tatsächliche Lage zumindest eines Teilbereiches der beiden Seitenwände und hier bevorzugt der A-Säulen in der Rohkarosserie vermessen. Die Vermessung erfolgt vorzugsweise bezüglich der Breite des Fahrzeuges, also der Y-Koordinate. Hieraus kann ein tatsächlicher Yₒ-Punkt als Fahrzeugmitte ermittelt werden, relativ zu dem der Referenzpunkt vorzugsweise an der Unterbodengruppe gesetzt werden kann. Die Festlegung der X-Koordinate des Vorderwagens kann mittels endseitigen Anschlag des Vorderwagens gegen Fahrtrichtung, also in negativer X-Richtung des Fahrzeuges, gegen die Unterbodengruppe, insbesondere gegen den Längsträger und/oder vorderen Querträger, erfolgen. Damit kann die Positionierung des mindestens einen Referenzpunktes bezüglich die X-Koordinate des Vorderwagens mittels dieses endseitigen Anschlages an zumindest einen Längsträger und/oder vorderen Querträger festgelegt wird.

Die Vermessung kann weiterhin auch bezüglich zumindest einer der übrigen Koordinate erfolgen. Vorzugsweise ist vorgesehen, dass zur Festlegung des mindestens einen Referenzpunktes bezüglich der X-Koordinate und/oder Z-Koordinate Koordinaten zumindest eines bereits erstellten Referenzpunktes für Kotflügel und/oder Motorhaube, genutzt wird.

Somit kann zur Positionierung des Vorderwagen über das Einsatzbauteil ein Referenzpunkt bezüglich der Y-Koordinate geschaffen werden, der, entsprechend der vermessenen tatsächlichen Lage der Seitenwände, an der Unterbodengruppe angeordnet ist. Zudem kann über die Ausbildung der Aufnahme des Halters eine Z-Koordinate bestimmt werden. Alternativ kann die Z-Koordinate zusätzlich in einem weiteren Referenzpunkt und zwar vorzugsweise an beiden Seitenwänden festgelegt werden. Die X-Koordinate kann, wie oben beschrieben, mittels Anschlag des Vorderwagens gegen die Unterbodengruppe festgelegt werden. Somit kann der Vorderwagen mit vierfachem Anschlag bezüglich der X-Koordinate, zwei Aufnahmen für vorzugsweise Positionierstifte oder-Nadeln als Positionierelemente bezüglich der Z-Koordinate und einer Aufnahme für vorzugsweise Positionierstifte oder-Nadeln als Positionierelemente bezüglich der Y-Koordinate vollständig nach den Seitenwänden ausgerichtet werden. Hierdurch kann ein optimales Spalt- und Passungsbild gewährleistet werden.

Die vorliegende Erfindung wird im Folgenden anhand der in den Zeichnungen dargestellten Beispiele näher erläutert. Die Zeichnungen zeigen:
- Fig. 1a: eine perspektivische Draufsicht auf einen vorderen Teil einer Rohkarosserie eines Fahrzeuges;
- Fig. 1b: eine perspektivische Draufsicht auf einen vorderen Teil der Rohkarosserie des Fahrzeuges, jedoch mit geändertem Referenzpunkt;
- Fig. 2: eine Ausschnittsvergrößerung II gemäß Figur 1a und 1b; und
- Fig. 3: eine perspektivische Draufsicht auf den vorderen Teil der Rohkarosserie gemäß Figur 1b, jedoch mit montierten vorderen Kotflügeln und montiertem vorderen Stützrahmen für den Vorderwagen.

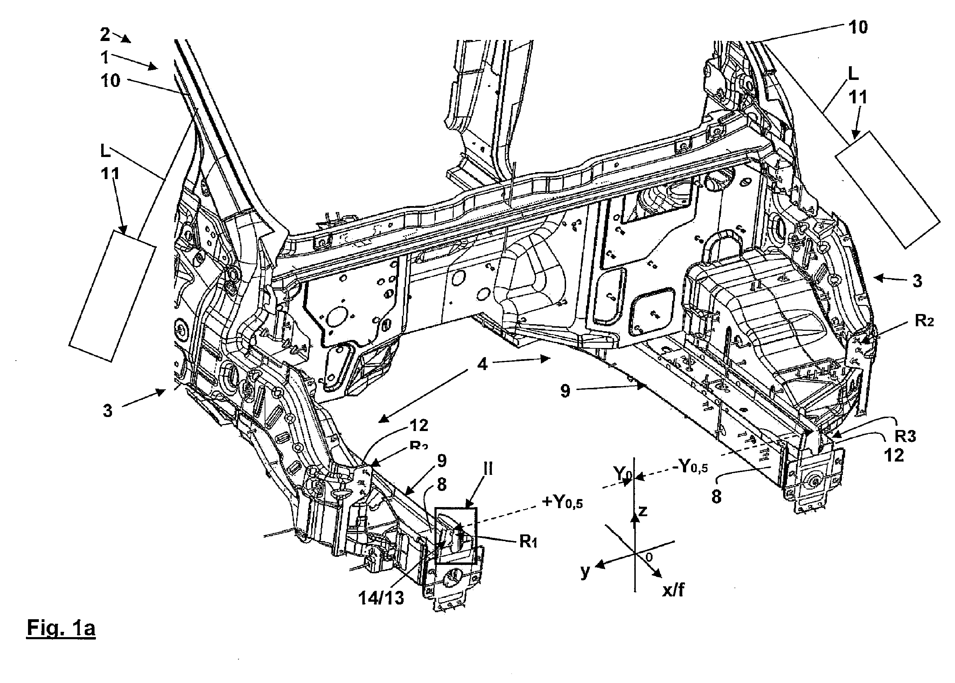

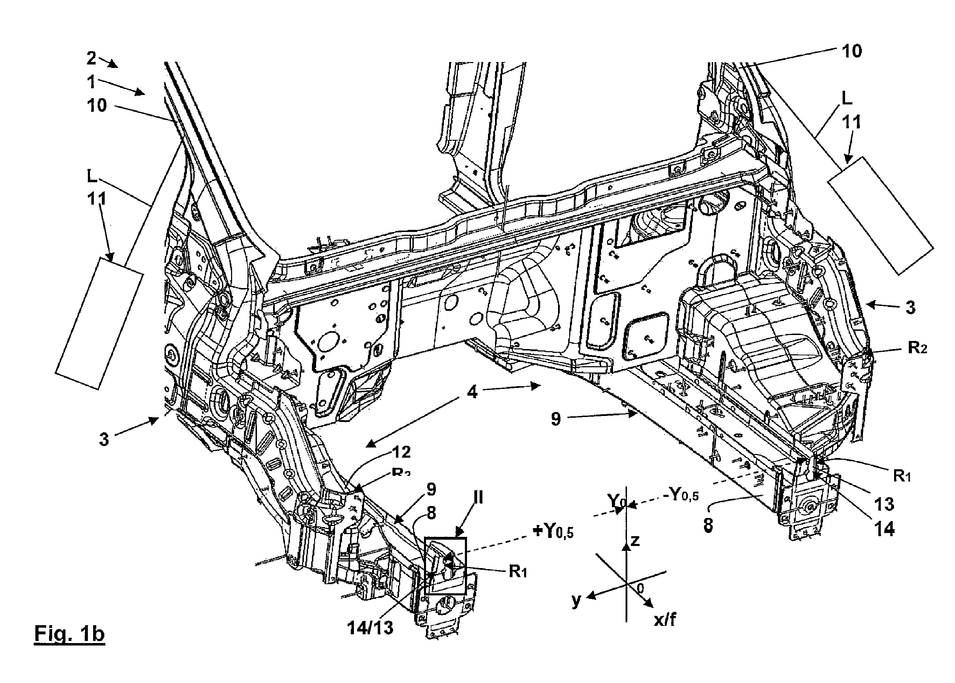

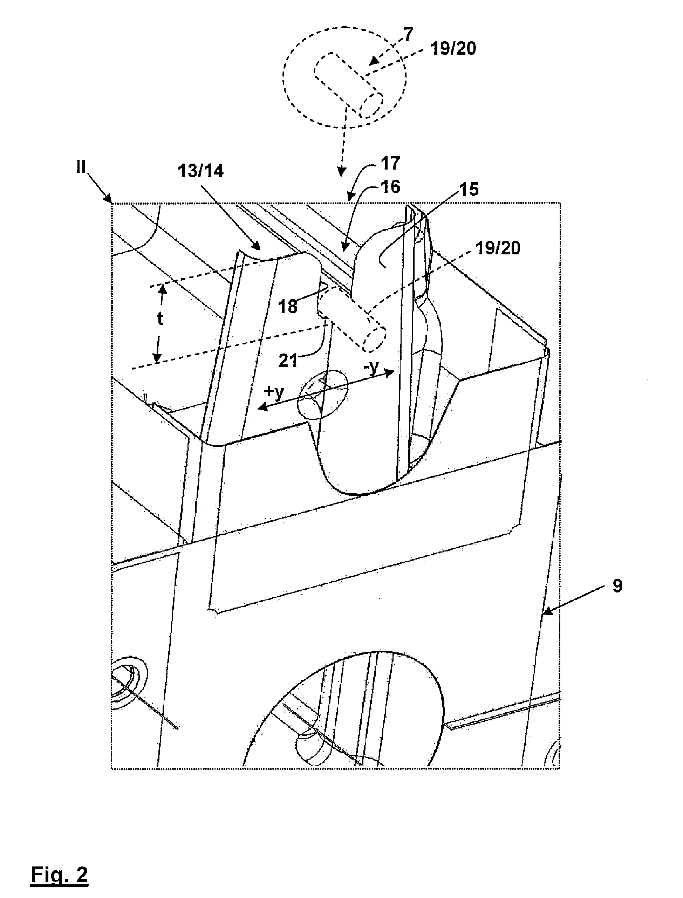

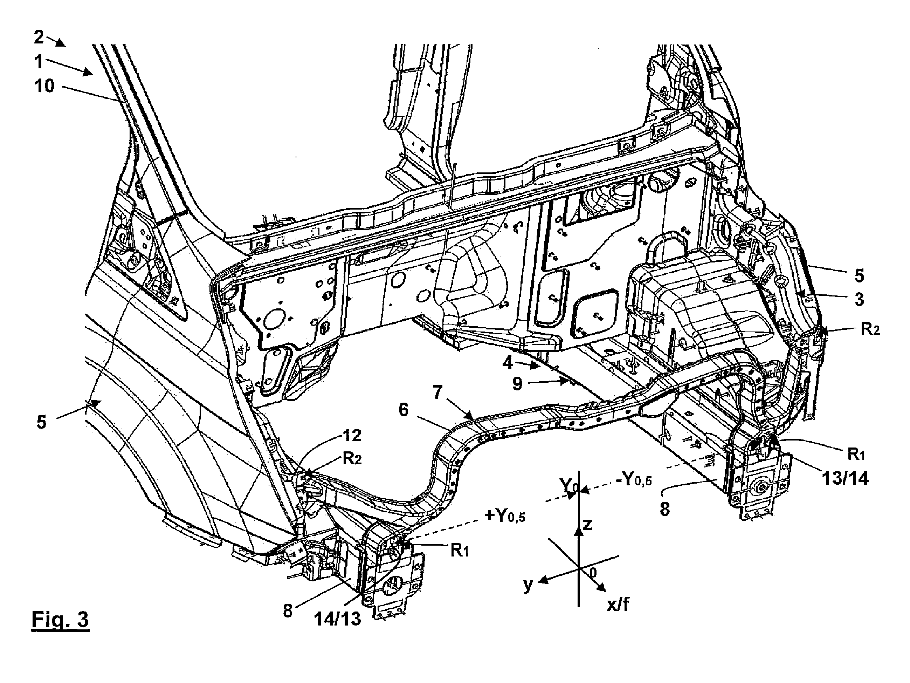

In den Figuren 1 und 3 wird jeweils eine perspektivische Draufsicht auf einen in Fahrtrichtung f vorderen Teil einer Rohkarosserie 1 eines Fahrzeuges 2 mit Seitenwänden 3 und Unterbodengruppe 4 wiedergegeben. Das Ausführungsbeispiel gemäß Figur 1a unterscheidet sich von dem Ausführungsbeispiel gemäß Figur 1b lediglich in der Ausgestaltung eines Referenzpunktes. In Figur 3 werden zusätzlich montierte Karosseriebauteile, hier beide vorderen Kotflügel 5 und ein Stützrahmen 6 eines hier nicht umfassender gezeigten Vorderwagens 7, gezeigt. In Figur 2 ist ein Ausschnitt gemäß Figur 1 dargestellt.

Für den Stützrahmen 6 des Vorderwagens 7 sind in dem hier gezeigten Ausführungsbeispieles vier Referenzpunkte R₁ bis R₃ bez. R₁ und R₂ als Anlagepunkte bezüglich der X-Koordinate x, der Y-Koordinate y und der Z-Koordinate z bei der Montage vorgesehen. Dank der Referenzpunkte R₁, R₂ und R₃ kann der Stützrahmen 6 und damit der an denselben zu montierende Vorderwagen 7 bei der Montage exakt positioniert werden. Hierbei ist jeweils ein Referenzpunkt R₂ auf einer Seitenwand 3 positioniert. In dem Ausführungsbeispiel gemäß Figur 1a sind unterschiedliche Referenzpunkte R₁ und R₃ in Fahrtrichtung f vorn auf Längsträgern 9 der Unterbodengruppe 4 angeordnet. In dem Ausführungsbeispiel gemäß Figur 1 b ist vorn auf jedem Längsträger 9 ein Referenzpunkte R₁ angebracht. Der Stützrahmen 6 des Vorderwagens 7 überbrückt damit den Übergang von der Unterbodengruppe 4 bzw. hier von den Längsträgern 9 zu den Seitenwänden 3. Maßtoleranzen bei der Fertigung und Zusammenbau von Seitenwänden 3 und Unterbodengruppe 4 können sich zu Abweichungen insbesondere bezüglich der Y-Koordinate aufsummieren. Dadurch kann der hier in der Figur 3 nur durch seinen Stützrahmen 6 repräsentierte Vorderwagen 7 mit seinem vollständigen Einbau in die Rohkarosserie 1 ein schlechtes Spalt- und Passungsbild mit den Kotflügeln 5 und/oder der hier nicht gezeigten Motorhaube aufweisen.

Abhilfe schafft hier das erfindungsgemäße Verfahren, wobei der Ausgangspunkt die Rohkarosserie 1 mit Unterbodengruppe 4 und Längsträgern 9 ist: In einem ersten Schritt wird die tatsächlichen Lage zumindest eines Teilbereiches zumindest einer der Seitenwände 3 in der Rohkarosserie 1 bezüglich zumindest einer ersten Koordinate des Fahrzeugs 2. In den hier gezeigten Ausführungsbeispielen sind der Teilbereich jeweils die A-Säule 10 und die erste Koordinate die Y-Koordinate y. Die Y-Koordinate y beschreibt die Fahrzeugbreite. Hier wird die tatsächliche Lage beider A-Säulen 10 bezüglich der Y-Koordinate y berührungsfrei mittels einer mit Laser L arbeitenden Messvorrichtung 11 erfasst. Anschließend wird eine tatsächliche Fahrzeugmitte y₀ bezüglich der Y-Koordinate errechnet. Die tatsächliche Lage der Seitenwände 3 bezüglich der tatsächlichen Fahrzeugmitte y₀ bzw. deren Beabstandung von derselben ist in der Zeichnung mit +Y_{0,5} bzw.-Y_{0,5} gekennzeichnet.

In einem zweiten Schritt wird mindestens ein Referenzpunkt, hier der Referenzpunkt R₁, hier bezüglich der Y-Koordinate y des Fahrzeugs 2 für den Vorderwagen 7 bzw. dessen Stützrahmen 6 auf der Grundlage der Ermittlung der tatsächlichen Lage der Seitenwände 3 erstellt. Mittels dieses Referenzpunktes R₁ wird die Lage des Vorderwagens 7 bezüglich der Y-Koordinate festgelegt. In einem dritten Schritt erfolgt die Montage des Vorderwagens 7 bzw. des Stützrahmen 6 des Vorderwagens 7. Da sich die Positionierung des Referenzpunktes R₁ auf dem Längsträger 9 bez. den Längsträgern 9 auf die tatsächliche Lage der Seitenwände 3 bzw. auf die daraus ermittelte tatsächliche Fahrzeugmitte y₀ bezieht, werden die oben genannten Abweichung kompensiert. Damit kann mit der Montage von Vorderwagen 7 und der angrenzenden Karosserieteile, d.h. Kotflügel 5 und hier nicht gezeigte Motorhaube, ein optimales Spalt- und Passungsbild erzielt werden.

Der Referenzpunkt R₂ ist hier jeweils bezüglich der Z-Koordinate z, d.h. der Fahrzeughöhe, und der X-Koordinate x, d.h. der Fahrzeuglänge, an den Seitenwänden 3 festlegt. Im Referenzpunkt R₃ gemäß Figur 1 a ist die X-Koordinate x durch Anschlag 12 an den Längsträger 9 festgelegt. Der Referenzpunkt R₁ wird hier bezüglich der X-Koordinate x ebenfalls durch Anschlag 12 an dem Längsträger 9 festgelegt. Dadurch ist die Positionierung des Stützrahmens 6 und damit des an dem Stützrahmen fest montierten Vorderwagens 7 bezüglich aller Koordinaten x, y, z festgelegt, wobei die Ermittlung der Y-Koordinate auf der tatsächlichen relativen Lage der Seitenwand 3 bzw. der Seitenwände 3 zueinander und zur Unterbodengruppe 4 basiert.

Wie unmittelbar ersichtlich, ist das Vorsehen lediglich eines Referenzpunktes R₁ entsprechend dem Ausführungsbeispiel gemäß Figur 1a zur Lagebestimmung des Vorderwagens 7 bezüglich der Y-Koordinate y ausreichend. In dem Ausführungsbeispiel gemäß Figur 1b sind zwei Referenzpunkte R₁ vorgesehen, die bezüglich der tatsächlichen Fahrzeugmitte y₀ spiegelsymmetrisch auf den Längsträgern 9 festgelegt und gleich ausgebildet sind. Diese Maßnahme erleichtert weiter die die Montage des Vorderwagens 7.

Zur Festlegung des Referenzpunktes R₁ bezüglich der Y-Koordinate y ist ein als Halter 13 ausgebildetes Einsatzbauteil 14 vorgesehen. Der Halter 13 ist entsprechend des ermittelten Abstandes +Y_{0,5} bzw.-Y_{0,5} von der tatsächlichen Fahrzeugmitte y₀ an dem Längsträger 9 fest montiert ist, das heißt hier mittels des Weldfast-Verfahrens mit demselben verschweißt ist.

Der Halter 13 ist als blechstreifenartig mit größeren Seitenflächen 16 ausgebildet, wobei er zu seiner Formstabilisierung seitlich rund umgebogen ist. Er verbleibt nach der Montage des Vorderwagens 7 als potentielles Verformungsteil an dem Längsträger 9. Der Halter 13 weist eine als Aufnahmeschlitz 16 mit Tiefendimension t ausgebildete Aufnahme 17 auf. Der Aufnahmeschlitz 16 ist so ausgerichtet, dass er seitlich in Fahrtrichtung f in die größeren Seitenflächen 16 einmündet. Die schmalen Innenseitenwände 18 des Aufnahmeschlitzes 16 sind etwa senkrecht zurY-Koordinate y auf dem Längsträger 9 angeordnet. Der Aufnahmeschlitz 16 öffnet sich in Richtung der Z-Koordinate. Der Halter 13 ist in dem Ausführungsbeispiel gemäß Figur 1a auf dem dort linken Längsträger 9 und in dem Ausführungsbeispiel gemäß Figur 1 b auf beiden Längsträger 9 montiert.

Zur Positionierung des Vorderwagens 7 an der Rohkarosserie 1 greift, wie in Figur 3 gestrichelt gezeichnet angedeutet, ein am Stützrahmen 6 vorgesehenes Positionierelement 19 mit einem Positionierstift 20 etwa in Richtung der Z-Koordinate in den Aufnahmeschlitz 16 des Halters 13 ein. In dem Aufnahmeschlitz 16 eingeführt, liegt der Positionierstift 20 auf dem Aufnahmegrund 21 auf und bezüglich der Y-Koordinate formschlüssig an den Innenseitenwänden 18 an. Hierdurch ist der Positionierstift 20 bezüglich der Y-Koordinate y an dem Längsträger 9 festgelegt. Zur leichteren Einführung des Positionierstiftes 20 in den Aufnahmeschlitz 16 ist derselbe nach oben hin erweitert und abgerundet.

Da der Positionierstift 20 auf dem Aufnahmegrund 21 aufliegt, wird durch die relative Lage des Aufnahmegrundes 21 zu dem Längsträger 9 auch die Z-Koordinate z in diesem Punkte festgelegt. Da hier ein Halter 13 mit einer bestimmten Lage des Aufnahmegrundes 21 eingesetzt ist, wird hierdurch nicht die relative Lage der beiden Seitenwände 3 zueinander bezüglich der Z-Koordinate z berücksichtigt. Hier nicht weiter dargestellt, aber erfindungsgemäß vorsehbar, ist ein Einsatzbauteil mit einstellbarem Punkt zur Festlegung der Z-Koordinate in Abhängigkeit von der relativen Lage der Seitenwände 3 bezüglich der Z-Koordinate z. Hierzu kann beispielsweise der Aufnahmegrund des Halters in seiner Höhe einstellbar ausgebildet sein. Alternativ kann der Halter mehrere Aufnahmen mit unterschiedlich hohen Aufnahmegründen aufweisen, von denen aufgrund der Messung der relativen Lage der Seitenteile eine bestimmte Aufnahme genutzt wird.

### BEZUGSZEICHENLISTE

- 1: Rohkarosserie
- 2: Fahrzeug
- 3: Seitenwand
- 4: Unterbodengruppe
- 5: Kotflügel
- 6: Stützrahmen
- 7: Vorderwagen
- 8: Endabschnitt
- 9: Längsträger
- 10: A-Säule
- 11: Messvorrichtung
- 12: Anschlag
- 13: Halter
- 14: Einsatzbauteil
- 15: Seitenfläche
- 16: Aufnahmeschlitz
- 17: Aufnahme
- 18: Innenseitenwand
- 19: Positionierelement
- 20: Positionierstift
- 21: Aufnahmegrund
- f: Fahrtrichtung
- t: Tiefendimension
- x: X-Koordinate
- y: Y-Koordinate
- y₀: Fahrzeugmitte bezüglich Y-Koordinate
- +Y_{0,5}: Abstand zur Fahrzeugmitte
- -Y_{0,5}: Abstand zur Fahrzeugmitte
- z: Z-Koordinate
- L: Laser

## Patentansprüche

1. Verfahren zur Montage eines Karosseriebauteils an eine Rohkarosserie (1) eines Fahrzeugs (2) mit Seitenwänden (3), mit den Verfahrensschritten:
Vermessen der tatsächlichen Lage zumindest eines Teilbereiches zumindest einer der Seitenwände (3) in der Rohkarosserie (1) bezüglich zumindest einer ersten Koordinate des Fahrzeugs (2),
Erstellen mindestens eines Referenzpunktes (R₁) bezüglich zumindest der ersten Koordinate des Fahrzeugs (2) für das zu montierende Karosseriebauteil auf der Grundlage der Vermessung und
Anbringen des zu montierenden Karosseriebauteils relativ zu diesem zumindest einem Referenzpunkt (R₁).

2. Verfahren nach Anspruch 1,
**dadurch gekennzeichnet, dass**
die tatsächliche Lage zumindest eines Teilbereiches der beiden Seitenwände (3), wie deren A-, B- und/oder C-Säulen (10), in der Rohkarosserie (1) bezüglich zumindest einer ersten Koordinate des Fahrzeugs (2) erfasst wird und hieraus zumindest bezüglich der ersten Koordinate ein tatsächlicher Nullpunkt als Fahrzeugmitte (y₀) ermittelt wird.

3. Verfahren nach Anspruch 1 oder 2,
**dadurch gekennzeichnet, dass**
der mindestens eine Referenzpunkt (R₁) zumindest bezüglich der ersten Koordinate mittels eines Einsatzbauteils (14) gebildet wird, das auf der Grundlage der Vermessung an der Rohkarosserie (1) positioniert wird.

4. Verfahren nach Anspruch 3, wobei das Einsatzbauteil (14) als Halter (13) ausgebildet ist, der eine Aufnahme (17) und/oder einen Anschlag mit dem Referenzpunkt (R₁) für ein Positionierelement (19) oder einen Positionierabschnitt des zu montierende Karosseriebauteils aufweist,
**dadurch gekennzeichnet, dass** das Positionierelement (19) oder der Positionierabschnitt des zu montierende Karosseriebauteils zur Positionierung desselben in der Aufnahme (17) aufgenommen bzw. gegen den Anschlag geführt wird.

5. Verfahren nach Anspruch 4, wobei die Aufnahme eine Vertiefung oder Ausnehmung mit einer Tiefendimension (t) aufweist,
**dadurch gekennzeichnet , dass**
der Halter (13) so an der Rohkarosserie (1) festgelegt wird, dass die Tiefendimension (t) zumindest in etwa senkrecht zur ersten Koordinate in Richtung einer zweiten Koordinate des Fahrzeugs (2) verläuft, die senkrecht zu der ersten Koordinate und einer dritten Koordinate des Fahrzeugs (2) ist.

6. Verfahren nach Anspruch 4 oder 5, wobei der Halter (13) als Blechstreifen mit einer endstirnseitigen Aufnahme (17) ausgebildet ist und die Aufnahme (17) einen Aufnahmeschlitz (16) aufweist,
**dadurch gekennzeichnet , dass**
der Halter (13) so auf der Rohkarosserie (1) positioniert wird, dass sich Aufnahmeschlitz (16) seitlich in Richtung der dritten Koordinate erstreckt.

7. Verfahren nach Anspruch 6, wobei die Aufnahme (17) einen Aufnahmegrund (21) aufweist, sich ihr Aufnahmequerschnitt in Richtung der Tiefendimension (t) zum Aufnahmegrund (21) hin verjüngt und der Aufnahmequerschnitt im Bereich des Aufnahmegrundes (21) so ausgebildet ist, dass das zugeordnete Positionierelement (19) oder der zugeordnete Positionierabschnitt des zu montierenden Karosseriebauteils seitlich formschlüssig in der Aufnahme (17) anliegt,
**dadurch gekennzeichnet , dass**
das Positionierelement (19) oder der Positionierabschnitt des zu montierenden Karosseriebauteils mit Anlage desselben über den sich verjüngenden Aufnahmequerschnitt in die Aufnahme (17) hinein geführt wird und in der Aufnahme (17) zumindest bezüglich der ersten Koordinaten formschlüssig zur Anlage kommt.

8. Verfahren nach einem der Ansprüche 3 bis 7,
**dadurch gekennzeichnet , dass**
das Einsatzbauteil (14) mittels Schweißens, wie Lichtbogenschweißen, beispielsweise nach dem Weldfast-Verfahren, oder Laserschweißen, auf der Rohkarosserie (1) festgelegt wird.

9. Verfahren nach einem der Ansprüche 1 bis 8, wobei das einzubauende Karosseriebauteil der Vorderwagen (7) des Fahrzeugs (2) ist sowie die erste Koordinate die Y-Koordinate (y), die zweite Koordinate die Z-Koordinate (z) und die dritte Koordinate die X-Koordinate (x) sind,
**dadurch gekennzeichnet , dass**
die tatsächliche Lage zumindest jeweils eines Teilbereiches beider Seitenwände (3) oder deren A-Säulen (10) in der Rohkarosserie (1) bezüglich Y-Koordinate (y) des Fahrzeugs vermessen wird und hieraus ein tatsächlicher Y₀-Punkt als Fahrzeugmitte (y₀) ermittelt wird.

10. Verfahren nach Anspruch 9,
**dadurch gekennzeichnet , dass** zur Festlegung des mindestens einen Referenzpunktes (R₁) bezüglich der X-Koordinate (x) und/oder Z-Koordinate (z) zumindest ein bereits erstellter Referenzpunkt (R₁) für den Vorderwagen (7), Kotflügel (5) und/oder Motorhaube, genutzt wird.

11. Verfahren nach Anspruch 10, wobei das Fahrzeug (2) eine Unterbodengruppe (4) mit Längsträgern (9) und/oder vorderem Querträger aufweist,
**dadurch gekennzeichnet , dass** die X-Koordinate (x) des Vorderwagens (7) durch Anschlag (12) an zumindest einem Längsträger (9) und/oder dem vorderen Querträger festgelegt wird.

12. Verfahren nach einem der Ansprüche 1 bis 11,
**dadurch gekennzeichnet , dass**
das Vermessen der tatsächlichen Lage zumindest eines Teilbereiches zumindest einer der Seitenwände (3) in der Rohkarosserie (1) bezüglich zumindest der ersten Koordinate des Fahrzeugs (2) berührungsfrei, vorzugsweise mittels Laser (L) erfolgt.

13. Halter, insbesondere zur Verwendung in dem Verfahren gemäß einem der Ansprüche 1 bis 12 zur Montage eines Karosseriebauteils an eine Rohkarosserie (1) eines Fahrzeugs (2), **dadurch gekennzeichnet , dass** der Halter (13) zur Zuordnung mindestens eines Referenzpunktes (R₁) bezüglich zumindest einer Koordinate des Fahrzeuges (2) eine Aufnahme (17) und/oder einen Anschlag für ein Positionierelement (19) oder einen Positionierabschnitt des zu montierenden Karosseriebauteils aufweist.

14. Halter nach Anspruch 13,
**dadurch gekennzeichnet , dass** die Aufnahme (17) eine Vertiefung oder Ausnehmung mit einer Tiefendimension (t) und einem Aufnahmegrund (21) aufweist und sich ihr Aufnahmequerschnitt in Richtung der Tiefendimension (t) zum Aufnahmegrund (21) hin verjüngt.

15. Halter nach Anspruch 14,
**dadurch gekennzeichnet , dass** der Aufnahmequerschnitt im Bereich des Aufnahmegrundes (21) so ausgebildet ist, dass das zugeordnete Positionierelement (19) oder der zugeordnete Positionierabschnitt des zu montierenden Karosseriebauteils zumindest seitlich formschlüssig in der Aufnahme (17) anlegbar ist.
